# EUROPÄISCHE PATENTSCHRIFT

(11) **EP 1 541 535 B1**
(45) Veröffentlichungstag und Bekanntmachung des Hinweises auf die Patenterteilung: **07.12.2011**
(21) Anmeldenummer: 04105372.9
(22) Anmeldetag: 28.10.2004
(51) Int. Cl.: C03C 11/00, C03B 19/10, B01J 13/04

(54) **Herstellungsverfahren für Mikrohohlkugeln, Lösung dafür und Mikrohohlkugeln**
Process for manufacturing hollow microbeads, solution and microbeads
Procédé de fabrication de microsphères creuses, solution et microsphères

(30) Priorität: 12.12.2003 DE 10358125; 30.04.2004 DE 102004215154; 19.05.2004 DE 102004024708
(43) Veröffentlichungstag der Anmeldung: 15.06.2005
(73) Patentinhaber: bene_fit GmbH, 92242 Hirschau (DE)
(72) Erfinder: Kräuter, Reinhard, 92237, Sulzbach-Rosenberg (DE)
(74) Vertreter: Hannke, Christian

(56) Entgegenhaltungen:
- EP-B- 0 717 675
- US-A- 3 796 777
- US-A- 4 063 916
- US-A- 4 411 847

## Beschreibung

Die Erfindung betrifft ein Herstellungsverfahren für Mikrohohlkugeln mittels einer Lösung aus Na₂O, SiO₂ und B₂O₃ gemäß dem Oberbegriff des Patentanspruches 1. Des Weiteren betrifft die Erfindung Mikrohohlkugeln gemäß dem Oberbegriff des Patentanspruches 8 und eine Lösung aus Na₂O, SiO₂ und B₂O₃ zur Herstellung von derartigen Mikrohohlkugeln gemäß dem Oberbegriff des Patentanspruches 9.

US 4,063,918 beschreibt die Herstellung von Glaskupeln, wobei eine Sprühtrocknung verwendet wird, innerhalb welcher die Tropfen eine heiße und anschließend eine kalte Zone durchlaufen. Damit werden nachteilig eine hohe Anzahl an Verfahrensschritten nötig.

Aus EP 0 717 675 B1 sind Mikrohohlkugeln aus Borsilikat bekannt, die durch Sprühtrocknung einer Lösung aus Na₂O, SiO₂ und B₂O₃ hergestellt werden. Ein in dieser Druckschrift ebenso beschriebenes Verfahren sieht vor, dass zur Bildung dieser Lösung Natriumsilikat und Natriumborat in Wasser vermischt werden, die daraus erhaltene Lösung sprühgetrocknet wird, anschließend die sich daraus ergebenen eine Borsilikatvorstufe bildenden Teilchen zerkleinert werden und dann ein Erwärmungsvorgang zur Bildung der Mikrohohlkugeln durchgeführt wird. In diesem Zusammenhang wird in EP 0 717 675 B1 aufgezeigt, dass die gewünschten Parameter der Endprodukte - also der Mikrohohlkugeln - nur dann erhalten werden können, wenn vorbestimmte Mengenverhältnisse von Natriumsilikat und Natriumborat sowie von Na₂O, SiO₂ und B₂O₃ angewendet werden.

Die Borsilikatvorstufe bildenden Teilchen weisen einen mittleren Durchmesser von 30-40 µm auf. Für eine Reduzierung der Dichte der Teilchen wird eine Wärmebehandlung zur Bildung von hohlen Mikrokugeln durchgeführt. Da die Bildung derartiger hohler Mikrokugeln mit einer Vergrößerung des Durchmessers der Teilchen einhergeht, würden Mikrohohlkugeln mit einem mittleren Durchmesser von mehr als 50 µm entstehen. Deshalb müssen derart hergestellte Mikrohohlkugeln in Ihrer anfänglich bereits vorhandenen sphärischen Form durch den Zerkleinerungsvorgang zuerst zerstört werden und anschließend mittels eines zusätzlichen Erwärmungsvorganges hohlkugelartig ausgebildet werden.

Der Zerkleinerungsvorgang wird mittels einer Strahlmühle, einer Fluidenergiermühle, einer Mediummühle oder einer Hammermühle durchgeführt. Hierdurch ergeben sich sehr kleine Scherben aus Borsilikatglas. Diese Scherben sind massive, unregelmäßig geformte Stücke. Dies hat zur Folge, dass der sich anschließende Erwärmungsvorgang zur Bildung hohler Mikrokugeln führt, deren Oberflächen nicht zwingend gleichmäßig rund und gleichmäßig dünnwandig sind.

Zudem weisen die auf diese Weise hergestellten Mikrohohlkugeln in der Regel einen relativ hohen ph- Wert auf, der bei bestimmten Verwendungen der derart hergestellten Mikrohohlkugeln aufgrund der damit einhergehenden geringen Hydrolysestabilität unerwünscht ist.

Demzufolge liegt der vorliegenden Erfindung die Aufgabe zugrunde, ein Verfahren zur Herstellung von Mikrohohlkugeln zur Verfügung zu stellen, welches die Herstellung von Mikrohohlkugeln aus Borsilikat mit geringem mittleren Durchmesser auf einfache und schnelle Weise ermöglicht. Es ist weiterhin Aufgabe der Erfindung, derartige Mikrohohlkugeln und eine dafür erforderliche Lösung zur Verfügung zu stellen.

Diese Aufgabe wird verfahrensseitig durch die Merkmale des Patentanspruches 1 und produktseitig durch die Merkmale der Ansprüche 8 und 9 gelöst.

Ein wesentlicher Punkt der Erfindung liegt darin, dass bei einem Verfahren zur Herstellung von Mikrohohlkugeln aus Borsilikat mittels einer Lösung aus Na₂O, SiO₂ und B₂O₃ folgende Schritte durchgeführt werden:
- Vermischen von Borsäure mit Natronlauge in einem vorgegebenen Verhältnis zu einer Natronlauge - Borsäure - Lösung;
- Vermischen der Natronlauge - Borsäure - Lösung mit einer Natriumsilikatlösung in einem vorgegebenen Verhältnis zu der Lösung aus Na₂O, SiO₂ und B₂O₃ und
- Sprühtrocknen der Lösung in einem Sprühturm unter Bildung von Mikrohohlkugein, wobei das vorgegebene Verhältnis von Natronlauge-Borsäure-Lösung zu Natriumsilikatlösung 21,7 Ma-% zu 78,3 Ma-% ist und das Lösungs-Verhältnis von Na₂O, SiO₂ und B₂O₃ in einem Bereich von 1 : 1,0 : 0,44 bis 1 : 2,49 : 0,44, vorzugsweise bei 1 : 2,1 : 0,44, liegt.

Somit ist auf einfache Weise eine alternative Lösungsherstellung zur Produktion von Mikrohohkugeln aus Borsilikat erhältlich. Durch die Verwendung von H₃BO₃ als Borsäure und NaOH als Natronlauge kann zudem eine kostengünstige Herstellung der Lösung ermöglicht werden. Ein hieraus resultierendes Lösungs - Mengenverhältnis von Na₂O, SiO₂ und B₂O₃ in einem Bereich von 1 : 1,0 : 0,44 bis 1 : 2,49 : 0,44, vorzugsweise von 1 : 2,1 : 0,44 ermöglicht die Bildung von dünnwandigen Mikrohohlkugeln mit gleichmäßig runder Oberfläche und mit geringem Durchmesser.

Durch die Verwendung von Borsäure mit Natronlauge in Kombination mit einer Natriumsilikatlösung erübrigt sich ein zwischengeschalteter Zerkleinerungsschritt zur Verringerung des mittleren Durchmessers von Vorstufenteilchen, um anschließend hohle Mikrokugeln mit dem gewünschten Durchmesser zu erhalten. Vielmehr wird erfindungsgemäß auf überraschende Weise durch Verwendung dieser Lösungszusammensetzung ein Verfahren mit lediglich drei Verfahrensschritten benötigt, um hohle Mikrokugeln mit einem geringen mittleren Durchmesser und einer gleichmäßig runden Oberfläche zu erhalten.

Gemäß einer bevorzugten Ausführungsform werden die Borsäure und die Natronlauge mit einem vorgegebenen Verhältnis von 35,7 Ma-% an H₃BO₃-Pulver und 64,3 Ma-% an 33,33%-igen Natronlauge zu der Natronlauge-Borsäure-Lösung vermischt.

Zusätzlich können die Schritte
- Vermischen der Mikrohohlkugeln mit einem sie umhüllendes Aluminiumsilikathydrat zu einem Endgemisch und
- Erwärmen des Endgemisches auf eine Temperatur von mehr als 300°C über eine Zeitspanne von mehr als 0,1 Sekunden
durchgeführt werden.

Das resultierende Lösungs-Mengenverhältnis von Na₂O, SiO₂ und B₂O₃ in einem Bereich von 1 : 1,0 : 0,44 bis 1 : 2,49 : 0,44, vorzugsweise von 1 : 2,1 : 0,44 ermöglicht die Bildung von Mikrohohlkugeln mit einem pH-Wert von 6 - 8 mittels des Erwärmungsvorganges mit einer Temperatur über 300°C als Nachtemperierungsvorgang. Derartige Mikrohohlkugeln sind oleophil.

Es kann vorkommen, dass ein Nachtemperierungsvorgang der Mikrohohlkugeln alleine nicht ausreicht, um die gewünschte Hydrolysestabilität der Mikrohohlkugeln zu erreichen. Vielmehr ist hierzu das zusätzliche Hinzumischen eines Additivs, wie Kaolin, Talkum oder kalziniertes Kaolin erforderlich, bevor der Nachtemperierungsvorgang stattfindet. Erst durch eine derartige Hinzumischung des Additivs kann während des Nachtemperierungsvorganges eine merkliche Senkung des pH - Wertes, beispielsweise von 11 auf ca. 7, erreicht werden. Hierbei dient der ermittelte pH - Wert als Bewertungsgröße für die Hydrolysestabilität. Je näher der Neutralpunkt bzgl. des pH - Wertes erreicht ist, desto höher ist die Hydrolysestabilität des Endproduktes.

Derartige Additive werden anschließend vorzugsweise mit einem Aufschwimm- oder Windsichtungsvorgang von den eigentlichen Mikrohohlkugeln wieder getrennt, um für deren Weiterverarbeitung, beispielsweise in einem Polymer, keine unnötigen Zusatzstoffe vorliegen zu haben.

Das hinzugefügte Aluminiumsilikathydrat kann Kaolin mit einer Schüttdichte von 0,01 - 1 g/ml sein. Ein derartiges Kaolin wird mit den Mikrohohlkugeln vorzugsweise in einem Mischungsmengenverhältnis von Mikrohohlkugeln zu Kaolin von 1 : mindestens 0,001 Vol-% vermengt.

Die Natronlauge-Borsäure-Lösung wird in einem vorgegebenen Verhältnis von 21,7 Ma-% an Natronlauge-Borsäure-Lösung zu 78,3 Ma-% an Natriumsilikatlösung mit der Natriumsilikatlösung zu der Lösung aus Na₂O, SiO₂ und B₂O₃ vermischt.

Aufgrund der erfindungsgemäßen Lösungszusammensetzung und dem erfindungsgemäßen Ablauf der Verfahrensschritte sind Mikrohohlkugeln mit einem mittleren Durchmesser von 6 - 50 µm erhältlich, ohne dass ein zusätzlicher Zerkleinerungsschritt - wie bisher - erforderlich ist.

Weitere vorteilhafte Ausführungsformen ergeben sich aus den Unteransprüchen.

Vorteile und Zweckmäßigkeiten der Erfindung sind der nachfolgenden Beschreibung in Verbindung mit den aufgeführten Beispielen und der Zeichnung zu entnehmen.

### Beispiel 1

Es werden 214 g an Natriumhydroxid in 429 g H₂O gelöst. Nach dem Abkühlen dieser Lösung werden in diese 33,3%-ige NaOH 357g an Borsäure (H₃BO₃-Pulver) gelöst.

Diese Natronlauge-Borsäurelösung wird mit 3.600 g Natron-Wasserglas 38° BE vermischt, wobei die Zusammensetzung des Natron-Wasserglases aus 8,2 Ma-% Na₂O, 27,3 Ma-% SiO₂ und 64,5 Ma-% H₂O besteht.

Die daraus erhaltene Lösung aus Na₂O, SiO₂ und B₂O₃ weist ein Verhältnis von 1 : 2,1 : 0,44 bezogen auf Na₂O, SiO₂ und B₂O₃ auf.

Anschließend wird mittels eines Sprühtrocknungsvorganges in einer handelsüblichen Sprühkammer aus dieser Lösung eine Vielzahl von Mikrohohlkugeln gebildet. Diese Mikrohohlkugeln sind sphärisch und dünnwandig ausgebildet und weisen eine gleichmäßig runde Oberfläche auf.

**Tabelle 1**

| | **Schüttdichte** | **d_{10, µm}** | **d_{50, µm}** | **d_{90, µm}** |
|---|---|---|---|---|
| Muster 1 | 0,05 kg/l | ⌀6,72 | ⌀18,82 | ⌀44,8 |

Ein weiterer Zerkleinerungsvorgang ist nicht erforderlich. Stattdessen werden die Mikrohohlkugeln in dieser sphärischen Form mit ihren Korngrößen für ihre spätere Verwendung beibehalten.

Der Tabelle 1 ist zu entnehmen, dass der Durchmesser der erfindungsgemäß hergestellten-Mikrohohlkugeln von 0 bis 44,8 µm reicht. Beispielsweise weisen 50% sämtlicher hergestellter Mikrohohlkugeln einen Durchmesser von weniger als 18,82 µm auf. 10% der Mikrohohlkugeln zeichnen sich durch einen Durchmesser von 0 bis 6,72 µm aus. Dies verdeutlicht, dass Mikrohohlkugeln mit geringem Durchmesser durch das erfindungsgemäße Verfahren erhalten werden können, ohne einen zwischengeschalteten Zerkleinerungsvorgang durchzuführen.

### Beispiel 2

Borsäure (H₃BO₃) wird mit Natronlauge (NaOH) gelöst. Anschließend wird diese Natronlauge-Borsäurelösung mit einer Natriumsilikatlösung vermischt. Die daraus erhaltene Lösung aus Na₂O, SiO₂ und B₂O₃ weist ein Verhältnis von 1 : 2,1 : 0,44 bezogen auf Na₂O, SiO₂ und B₂O₃ auf.

Anschließend wird mittels eines Sprühtrocknungsvorganges in einer handelsüblichen Sprühkammer aus dieser Lösung eine Vielzahl von Mikrohohlkugeln gebildet. Diese Mikrohohlkugeln weisen als Ausgangsparameter folgende Werte auf:

**Tabelle 2**

| | **pH-Wert** | **Schüttdichte** | **Dichte** | **d₁₀, µm** | **d50, µm** | **d₉₀, µm** |
|---|---|---|---|---|---|---|
| Muster 1 | 11 | 0,05 kg/l | - | ⌀ 6,72 | ⌀ 18,82 | ⌀ 44,8 |

Ein weiterer Zerkleinerungsvorgang findet nicht statt. Stattdessen werden die Mikrohohlkugeln in dieser sphärischen Form mit ihrer Korngröße nachtemperiert.

Bei diesem Nachtemperierungsvorgang werden die Mikrohohlkugeln zunächst mit einem Aluminiumsilikathydrat, wie Kaolin, mit einer Schüttdichte von 0,01 - 1 g/ml trocken gemischt.

Hierbei wird ein Mischungsverhältnis von 1 Volumenanteil an Mikrohohlkugeln zu mindestens 0,001 Volumenanteil an Kaolin verwendet. Diese Mischung wird ausreichend homogenisiert und schließlich bei einer Temperatur von mehr als 300°C über eine Zeitspanne von mindestens 0,1 Sekunden erhitzt.

Bei einem derartigen Nachtemperierungsvorgang ändern sich die sphärische Form, die Korngröße und die Schüttdichte der Mikrohohlkugeln nicht. Als Ergebnis des Nachtemperierungsvorganges werden Mikrohohlkugeln erhalten, die bei einem Vermischungsvorgang mit Wasser einen deutlich geringeren alkalischen pH - Wert aufzeigen als vor dem Nachtemperierungsvorgang. Beispielsweise weisen die Mikrohohlkugeln vorher einen pH - Wert von 11 und nachher einen pH - Wert von ca. 7, vorzugsweise 6,8 auf.

Anhand der nachfolgenden Tabelle 3 wird gezeigt, welche Auswirkungen das Anwenden verschiedener Temperaturen während des Nachtemperierungsvorganges auf den pH - Wert der Mikrohohlkugeln und ihren Zustand haben.

**Tabelle 3**

| **Versuch-Nr.** | **Temp.** | **pH-Wert** | **Beobachtungen** |
|---|---|---|---|
| 1 | 350°C | 11,2 | Geringes Agglomerieren |
| 2 | 450°C | 10,9 | Geringes Agglomerieren |
| 3 | 550°C | 10,7 | Stärkeres Agglomerieren |
| 4 | 650°C | --- | gesintert! |
| 5 | 600°C | --- | gesintert! |

Bei der in Tabelle 3 aufgeführten Versuchsreihe wurden Mikrohohlkugeln ohne Zusatz von Additiven, wie Aluminiumsilikathydrat, verwendet. Der Tabelle 2 ist deutlich zu entnehmen, dass zwar eine gewisse pH - Wert - Reduzierung allein durch den Nachtemperierungsvorgang erhalten werden kann, jedoch nur bis zu einem minimalen pH - Wert von 10,7. Zudem treten hierbei bei den Mikrohohlkugeln Zustandsveränderungen, wie geringes Agglomerieren, stärkeres Agglomerieren und Sinterungszustände auf. Demzufolge reicht ein Nachtemperierungsvorgang alleine nicht aus, um eine gewünschte Hydrolysestabilität der Mikrohohlkugeln bei gleichzeitigem Aufrechterhalten der gewünschten Mikrohohlkugel - Struktur zu erhalten.

Der nachfolgenden Tabelle 4 ist eine Versuchsreihe zu entnehmen, bei der Mikrohohlkugeln unter Zusatz von Additiven, wie Kaolin, Talkum oder kalziniertem Kaolin, nachtemperiert werden, um einen gewünschten pH - Wert zu erhalten.

**Tabelle 4**

| **Versuch-Nr.** | **Additiv** | **MHK:Additiv** | **Beobachtung** | **pH-sofort** |
|---|---|---|---|---|
| V 1 | Kaolin | 1 : 1 | Pulvrig, gute Auftrennung nach dem Suspendieren | 7,1 |
| V 2 | Kaolin | 1 : 1 | Pulvrig, gute Auftrennung nach dem Suspendieren | 6,4 |
| V 3 | Kaolin | 1 : 1 | --- | 11,4 |
| V 4 | Kaolin | 1 : 1 | --- | 11,5 |
| V 5 | Kaolin | 1 : 1 | Pulvrig, gute Auftrennung nach dem Suspendieren | 7,0 |
| V 6 | Kaolin | 2 : 1 | Pulvrig, gute Auftrennung nach dem Suspendieren | 7,1 |
| V 7 | Kaolin | 2 : 1 | Pulvrig, gute Auftrennung nach dem Suspendieren | 6,8 |
| V 8 | Talkum | 2 : 1 | Pulvrig, schwer suspendierbar, schlechte Auftrennung | 10,6 |
| V 9 | Talkum | 2 : 1 | Gering agglomiert, gut suspendierbar, schlechte Auftrennung | 10,2 |
| V 10 | Kalziniertes Kaolin | 2 : 1 | Pulvrig, gut suspendierbar, schnelle aber unvollständige Auftrennung | 8,4 |
| V 11 | Talkum | 2 : 1 | Stark agglomeriert, schlecht suspendierbar, keine Auftrennung | 9,2 |
| V 12 | Kalziniertes Kaolin | 2 : 1 | Agglomeriert, suspendierbar, kaum Auftrennung | 7,9 |

Dieser Tabelle 4 ist zu entnehmen, dass in Abhängigkeit von der Verwendung verschiedener Additive und verschiedener Mengenverhältnisse von Mikrohohlkugeln zu Additiven eine pH - Wert - Reduzierung bis auf 6,8 möglich ist.

Vorteilhaft kann nach dem Nachtemperierungsvorgang ein Trennungsvorgang von Mikrohohlkugeln und Additiv durchgeführt werden. Dies kann beispielsweise durch Aufschwimmen oder durch Windsichtung erfolgen.

Die nachfolgende Tabelle 5 zeigt Spezifikationsdaten der eingesetzten Additive.

**Tabelle 5**

| **Eigenschaften / Zusammensetzung** | **Kaolin** | **kalz. Kaolin** | **Talkum** |
|---|---|---|---|
| Korngrößenanteil < 2 µm | > 20 Ma% | > 20 Ma% | > 20 Ma% |
| Weißgrad R 457 nm | > 70 % | > 70 % | > 70 % |
| Fe₂O₃-Gehalt | < 2 Ma% | < 2 Ma% | < 2 Ma% |
| Kaolinitgehalt | > 80 Ma% | < 20 Ma% | --- |
| Talkumgehalt | --- | --- | > 80 Ma% |
| Mullitgehalt | --- | < 10 Ma% | --- |
| H₂O-Gehalt | < 5 Ma% | < 2 Ma% | < 5 Ma% |

Fig. 1 zeigt eine Lichtmikroskopieaufnahme der erfindungsgemäß hergestellten Mikrohohlkugeln und

Fig. 2 zeigt eine weitere Lichtmikroskopaufnahme der erfindungsgemäß hergestellten Mikrohohlkugeln.

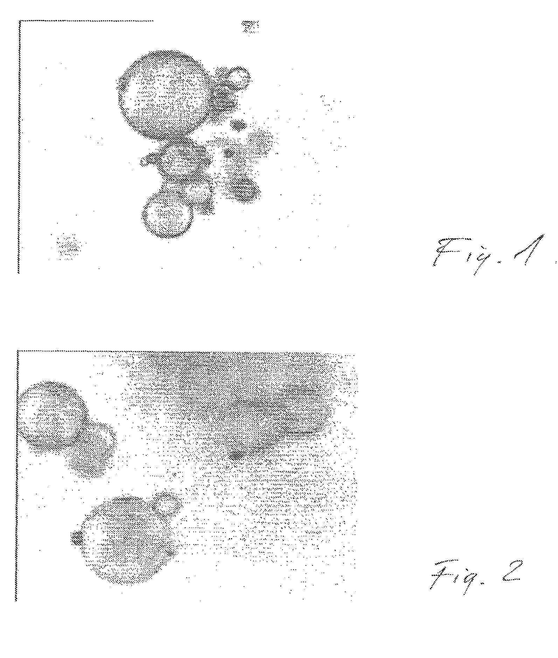

Den Figuren 1 und 2 ist zu entnehmen, dass die äußeren Konturen, also die Struktur der Mikrohohlkugeln nach einem durchgeführten Nachtemperierungsvorgang und nach einem Trennungsvorgang der Mikrohohlkugeln von einem Kaolin weiterhin erhalten bleiben.

Der nachfolgenden Tabelle 6 und Tabelle 7 sind Versuchsreihen zu entnehmen, welche die Hydrolysestabilität der erfindungsgemäß hergestellten Mikrohohlkugeln bei Langzeitmessungen wiedergibt.

**Tabelle 6**

| **Versuch-Nr.** | **Additiv** | **pH sofort** | **pH ca. 7d** | **Beobachtungen (n. ca. 7d)** |
|---|---|---|---|---|
| V 5 | Kaolin | 7,0 | 7,8 | Gute Auftrennung, MHK schwimmen auf |
| V 1 | Kaolin | 7,1 | 7,8 | Gute Auftrennung, MHK schwimmen auf |
| V 7 | Kaolin | 6,8 | 7,7 | Gute Auftrennung, MHK schwimmen auf |
| V 10 | Kalziniertes Kaolin | 8,4 | 8,7 | MHK schwimmen auf |
| V 12 | Kalziniertes Kaolin | 7,9 | 8,3 | MHK schwimmen auf |
| V11 | Talkum | 9,3 | 9,0 | Kaum etwas schwimmt auf |

**Tabelle 7**

| **Versuch-Nr.** | **Additiv** | **pH nach 30 d** | **Beobachtungen (nach ca. 30 Tagen)** |
|---|---|---|---|
| V 5 | Kaolin | 8,3 | Gute Auftrennung, MHKs schwimmen nach wie vor oben auf |
| V1 | Kaolin | 8,0 | Auftrennung vorhanden, MHKs schwimmen auf |
| V 7 | Kaolin | 8,0 | Auftrennung vorhanden, MHKs schwimmen auf |
| V 10 | Kalziniertes Kaolin | 8,5 | Auftrennung vorhanden, MHKs schwimmen auf |
| V 12 | Kalziniertes Kaolin | 8,5 | Auftrennung ja, wenig MHKs schwimmen auf |
| V 11 | Talkum | 9,2 | Kaum etwas schwimmt auf |

Der Tabelle 6 ist deutlich zu entnehmen, dass eine nach 7 Tagen durchgeführte Messung einzelner in Tabelle 4 aufgeführter Mikrohohlkugel - Zusammensetzungen als Ergebnis eine nur geringfügige Erhöhung des pH - Wertes ergaben. Zudem ist zu beobachten, dass der Trennungsvorgang zum gewünschten Aufschwimmen der Mikrohohlkugeln geführt hat.

Gemäß Tabelle 7 wurde die Messung nach 30 Tagen wiederholt. Dieser Tabelle ist deutlich zu entnehmen, dass insbesondere bei der Verwendung von Kaolin als Additiv eine Langzeit - Hydrolysestabilität der Mikrohohlkugeln vorhanden ist, da diese eine nur geringe Erhöhung des pH-Wertes aufweisen. Demzufolge kann die Hydrolysestabilität der erfindungsgemäß hergestellten Mikrohohlkugeln, gemessen als pH - Wert, auch über einen längeren Zeitraum stabil gehalten werden. Die gewünschte Struktur der Mikrohohlkugel bleibt hierbei erhalten.

Selbstverständlich kann zur Trennung des Additivs von den Mikrohohlkugeln neben dem in den Tabellen aufgezeigten Aufschwimmverfahren jedes andere bekannte Trennverfahren verwendet werden.

## Patentansprüche

1. Verfahren zur Herstellung von Mikrohohlkugeln aus Borsilikat mittels einer Lösung aus Na₂O, SiO₂ und B₂O₃,
mit folgenden Schritten:
- Vermischen von Borsäure mit Natronlauge in einem vorgegebenen Verhältnis zu einer Natronlauge-Borsäure-Lösung;
- Vermischen der Natronlauge-Borsäure-Lösung mit einer Natriumsilikatlösung in einem vorgegebenen Verhältnis zu der Lösung aus Na₂O, SiO₂ und B₂O₃ und
- Sprühtrocknen der Lösung in einem Sprühturm unter Bildung von Mikrohohlkugeln,
**dadurch gekennzeichnet, dass**
das vorgegebene Verhältnis von Natronlauge-Borsäure-Lösung zu Natriumsilikatlösung 21,7 Ma-% zu 78,3 Ma-% ist und das Lösungs-Verhältnis von Na₂O, SiO₂ und B₂O₃ in einem Bereich von 1:1,0 : 0,44 bis 1 : 2,49 : 0,44, vorzugsweise bei 1 : 2,1 : 0.44, liegt.

2. Verfahren nach Anspruch 1,
**dadurch gekennzeichnet, dass**
das vorgegebene Verhältnis von Borsäure zu Natronlauge 35,7 Ma-% an H₃BO₃-Pulver zu 64,3 Ma-% an 33,33 %-iger Natronlauge ist.

3. Verfahren nach einem der vorangegangenen Ansprüche,
**gekennzeichnet durch**
die weiteren Schritte:
- Vermischen der Mikrohohlkugeln mit einem sie umhüllendes Aluminiumsilikathydrat zu einem Endgemisch und
- Erwärmen des Endgemisches auf eine Temperatur von mehr als 300°C über eine Zeitspanne von mehr als 0,1 Sekunden.

4. Verfahren nach Anspruch 3,
**dadurch gekennzeichnet, dass**
das Aluminiumsilikathydrat Kaolin mit einer Schüttdichte von 0,01 - 1 g/ml ist.

5. Verfahren nach Anspruch 4,
**dadurch gekennzeichnet, dass**
ein Mischungsmengenverhältnis von Mikrohohlkugeln zu Kaolin von 1 : mindestens 0,001 Vol-% verwendet wird.

6. Verfahren nach einem der Ansprüche 3 - 5,
**dadurch gekennzeichnet, dass**
das Aluminiumsilikathydrat in Form von Kaolin oder kalziniertem Kaolin ist und die Mikrohohlkugeln nach dem Schritt des Erwärmens des Endgemisches einen pH -Wert von ca. 6 bis 8 aufweisen.

7. Verfahren nach einem der Ansprüche 3 - 6,
**dadurch gekennzeichnet, dass**
nach dem Schritt des Erwärmens des Endgemisches das Aluminiumsilikathydrat von den Mikrohohlkugeln durch einen Aufschwimm - oder Windsichtungsvorgang getrennt wird.

8. Mikrohohlkugeln aus Borsilikat,
**dadurch gekennzeichnet, dass**
die Mikrohohlkugeln nach einem Verfahren gemäß einem der vorangegangenen Ansprüche hergestellt sind wobei das Aluminiumsilikathydrat in Form von Kaolin oder kalziniertem Kaolin ist, die Mikrohohlkugeln einen mittleren Durchmesser von 0,01 bis 50 µm aufweisen und die Mikrohohlkugeln nach dem Schritt des Erwärmens des Endgemisches einen pH - Wert von ca. 6 bis 8 aufweisen.

9. Lösung aus Na₂O, SiO₂ und B₂O₃ zur Herstellung von Mikrohohlkugeln,
**dadurch gekennzeichnet, dass**
die Lösung aus einem Gemisch aus H₃BO₃, NaOH und einer Natriumsilikatlösung gebildet ist und Na₂O, SiO₂ und B₂O₃ in einem Verhältnis von 1 : 1,0 : 0,44 bis 1 : 2,49 : 0,44, vorzugsweise von 1 : 2,1 : 0,44, enthält.

## Claims

1. A method of producing hollow microbeads from boron silicate by means of a solution of Na₂O, SiO₂ and B₂O₃, with the following steps:
- mixing boric acid with caustic soda in a pre-determined ratio to form a caustic soda / boric acid solution;
- mixing the caustic soda / boric acid solution with a sodium silicate solution in a pre-determined ratio to form the solution of Na₂O, SiO₂ and B₂O₃ and
- spray drying the solution in a spraying tower whilst forming hollow microbeads,
**characterized in that**
the pre-determined ratio of caustic soda / boric acid solution to the sodium silicate solution is from 21.7 % by mass to 78.3 % by mass, and the solution ratio of Na₂O, SiO₂ and B₂O₃ is in a range of from 1 : 1.0 : 0.44 to 1 : 2.49 : 0.44, and is preferably at 1 : 2.1 : 0.44.

2. A method according to claim 1, **characterized in that** the pre-determined ratio of boric acid to caustic soda is 35.7 % by mass on H₃BO₃ to 64.3 % by mass on 33.33 % caustic soda.

3. A method according to one of the preceding claims, **characterized by** the further steps:
- mixing the hollow microbeads with an aluminium silicate hydrate which envelopes them so as to form an end mixture, and
- heating the end mixture to a temperature of more than 300°C over a time period of more than 0.1 sec.

4. A method according to claim 3, **characterized in that** the aluminium silicate hydrate is kaolin with a bulk density of from 0.01 to 1 g/ml.

5. A method according to claim 4, **characterized in that** a mixing quantity ratio of hollow microbeads to kaolin of 1 : at least 0.001 % by volume is used.

6. A method according to any one of claims 3 to 5, **characterized in that** the aluminium silicate hydrate is in the form of kaolin or calcinated kaolin, and after the step of heating the end mixture the hollow microbeads have a pH value of from approximately 6 to 8.

7. A method according to any one of claims 3 to 6, **characterized in that** after the step of heating the end mixture the aluminium silicate hydrate is separated from the hollow microbeads by a floating or air sifting procedure.

8. Hollow microbeads of boron silicate, **characterized in that** the hollow microbeads are produced in accordance with a method according to any one of the preceding claims, wherein the aluminium silicate hydrate is in the form of kaolin or calcinated kaolin, the hollow microbeads have an average diameter of from 0.01 to 50 µm and after the step of heating the end mixture the hollow microbeads have a pH value of from approximately 6 to 8.

9. A solution of Na₂O, SiO₂ and B₂O₃ for producing hollow microbeads, **characterized in that** the solution is formed from a mixture of H₃BO₃, NaOH and a sodium silicate solution and contains Na₂O, SiO₂ and B₂O₃ in a ratio of from 1 : 1.0 : 0.44 to 1 : 2.49 : 0.44, preferably of 1 : 2.1 : 0.44.

## Revendications

1. Procédé pour la fabrication de microsphères creuses de silicate de bore au moyen d'une solution de Na₂O, de SiO₂ et de B₂O₃,
avec les étapes suivantes :
- mélanger de l'acide borique avec de la soude, dans un rapport prédéfini, pour donner une solution de soude et d'acide borique ;
- mélanger la solution de soude et d'acide borique avec une solution de silicate de sodium, dans un rapport prédéfini, pour donner la solution de Na₂O, de SiO₂ et de B₂O₃ et
- sécher la solution par pulvérisation dans une tour de pulvérisation pour former des microsphères creuses,
**caractérisé en ce que**
le rapport prédéfini de la solution de soude et d'acide borique à la solution de silicate de sodium est de 21,7 % en masse à 78,3 % en masse et le rapport de Na₂O, de SiO₂ et de B₂O₃ se situe dans une plage de 1:1,0:0,44 à 1:2,49:0,44, de préférence, à une valeur de 1:2,1:0,44.

2. Procédé selon la revendication 1,
**caractérisé en ce que**
le rapport prédéfini de l'acide borique à la soude est de 35,7 % en masse de poudre de H₃BO₃ à 64,3 % en masse de soude à 33,33 %.

3. Procédé selon l'une quelconque des revendications précédentes, **caractérisé en ce que**
l'on effectue les étapes supplémentaires suivantes :
- mélanger les microsphères creuses à un silicate d'aluminium hydraté qui les enveloppe de manière à former un mélange final, et
- chauffer le mélange final à une température de plus de 300 °C sur une période de temps supérieure à 0,1 seconde.

4. Procédé selon la revendication 3,
**caractérisé en ce que**
le silicate d'aluminium hydraté est un kaolin ayant une masse volumique apparente de 0,01 à 1 g/ml.

5. Procédé selon la revendication 4,
**caractérisé en ce que**
l'on utilise un rapport de quantités de mélange des microsphères creuses au kaolin de 1:au moins 0,001 % en volume.

6. Procédé selon l'une quelconque des revendications 3 à 5,
**caractérisé en ce que**
le silicate d'aluminium hydraté se présente sous la forme de kaolin ou de kaolin calciné et **en ce que** les microsphères creuses présentent, après l'étape du chauffage du mélange final, une valeur de pH d'environ 6 à 8.

7. Procédé selon l'une quelconque des revendications 3 à 6,
**caractérisé en ce que**
après l'étape du chauffage du mélange final, le silicate d'aluminium hydraté est séparé des microsphères creuses par le biais d'une opération de flottaison ou de séparation à l'air.

8. Microsphères creuses de silicate de bore,
**caractérisées en ce que**
les microsphères creuses sont fabriquées par un procédé selon l'une quelconque des revendications précédentes, dans lequel le silicate d'aluminium hydraté se présente sous la forme de kaolin ou de kaolin calciné, **en ce que** les microsphères creuses présentent un diamètre moyen de 0,01 à 50 µm et **en ce que** les microsphères creuses présentent, après l'étape du chauffage du mélange final, une valeur de pH d'environ 6 à 8.

9. Solution de Na₂O, de SiO₂ et de B₂O₃ pour la fabrication de microsphères creuses,
**caractérisée en ce que**
la solution est constituée d'un mélange de H₃BO₃, de NaOH et d'une solution de silicate de sodium et contient du Na₂O, du SiO₂ et du B₂O₃ dans un rapport de 1:1,0:0,44 à 1:2,49:0,44, de préférence un rapport de 1:2,1:0,44.
